# EUROPEAN PATENT APPLICATION

(11) **EP 1 008 945 A1**
(43) Date of publication of application: **14.06.2000**
(21) Application number: 97911533.4
(22) Date of filing: 14.10.1997
(51) Int. Cl.: G06F 17/60, G07F 17/32, G07F 7/02

(54) **GAME METHOD USING CREDIT CARD**

(30) Priority: 30.10.1996 RU 96121040
(71) Applicant: Kataev, Vladimir Alexandrovich, Moscow 109147 (RU); Anisimov, Sergei Nikolaevich, Zhukovsky 140160 (RU); Aktsionernoe Obschestvo Zakrytogo Tipa " Stins Coman", Moscow, 105203 (RU)
(72) Inventor: KATAEV, Vladimir Alexandrovich, Moscow 109147 (RU); ANISIMOV, Sergei Nikolaevich, Zhukovsky 140160 (RU)
(74) Representative: Kidd, Piers Burgess
(86) International application number: RU9700324
(87) International publication number: WO9819257

(57) **Abstract**

The game method with credit card consists in that the card is validated and ability to play the game determined. The game is played on an electronic gaming device and the result of the game is recorded. What is new in the method is that the game is played independently and the result of the game is recorded directly on the credit card by the electronic gaming device.

## Description

### Field of the Invention

The invention relates to methods of gaming in which the stake in the game is put up by the use of credit cards.

### Prior Art

A method and "machine gaming system operated with basic payment cards" are known [US Patent No. 5,457, 306, G 06 F 15/44, G 06 F 15/21, 10.10.95], which implement a method of gaming using centralized accounting for game results on a single central processor at a finance center which may be located in the immediate vicinity or at a great distance from the place where the game is played. The basis of the system is a slot machine equipped with a device for reading Visa, MasterCard or American Express credit cards. A group of such gaming machines (automatic devices) is connected to the remote finance center. The method of gaming using a card for payment is implemented as follows. The player, inserting his card into the game machine, identifies himself and information on him is transmitted to the finance center. If the user has available cash, information on approval to play the game is transmitted to the gaming machine. After a gaming session with the gaming machine, information on winnings (losses) is once more sent to the finance center, where the amount is added to (subtracted from) the user's available balance. If the remaining balance is sufficient to continue the game, the finance center transmits a command to the gaming machine to allow the game to be continued. In this method, the game can continue under the control of the finance center only as long as the user's balance remains sufficient to play the game.

In this method of playing, the card carries demographic information on the user (such as last name, first name, year of birth, residence address, etc.), i.e., is a sort of user passport, and the finance center may be located, for example, at any bank where the user has an account.

Also known are a method and "system for placing stakes with programmable cards for gaming" [US Patent No. 5,457, 306, G 06 F 15/44, G 06 F 15/21, 10.10.95]. This system contains several terminals connected through an interface to a central processor and implements the same centralized method as the system mentioned above. A card containing data unambiguously corresponding to the user may be inserted in any terminal. The card may be used as an element of the gaming device, carrying demographic data on the user, and as a method of payment by changing the data in the central memory device of the system as bets are placed. The results of each game (win-loss) are used to change data in central processor memory. The terminals, if requested by the user, can print out receipts. However, this system also works in a centralized manner, since the method of playing the game involves a centralized method of identifying the user, all win-loss information is stored in a single location and all terminals are connected to a central processor.

This method of gaming using a payment card is similar to the above method. A system implementing this method contains an electronic gaming device, including a processor, power supply, read-only and read-write memory, a display, control organs and a reader which is made to allow repeated electrical contact with the payment card. The system also contains a device to connect the electronic gaming machine to the central processor memory.

### Disclosure of the Invention

The methods and systems described above have the following deficiencies:
- gaming is not independent, since all information on the process of the game is transmitted over communications lines to the central processor;
- the credit cards contain extra user demographic data;
- it is not possible to play a game at any location convenient to the user, and anonymity of the player is not assured.

The purpose of the invention is to create a method allowing independent performance of the game process with a credit card at any location convenient to the user without being connected to a single central processor.

This is achieved by the fact that in the game method with credit card, in which the validity of the card is verified, ability to play the game is determined, the game is played with an electronic gaining device and the result of the game is recorded, the game is played independently and the result of the game is recorded directly on the credit card by the electronic gaming device.

### Brief Description of the Drawings

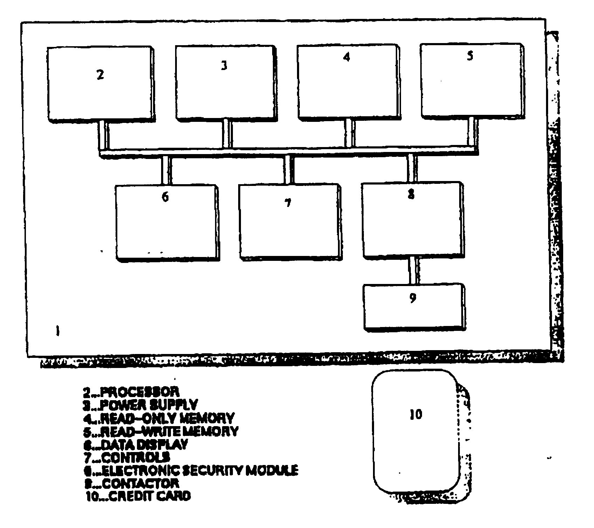

FIG. 1 shows a structural diagram of the device to implement the method.

### Best Mode of Carrying out the Invention

The game method with credit card can be implemented by use of device 1, which includes interconnected processor 2, controlling the operation of the entire device, power supply 3, read-only memory 4, containing the logic of the game, read-write memory 5, used in the process of the game for temporary storage of data, information display 6, showing the game situation, control organs 7 to input the initial conditions of the game (for example, the bet) and to input control commands (for example, turning the device on and off, starting a game, clearing, repeating a game, etc.), electronic security module 8 and reader 9. The reader is made to permit repeated contact with the credit card 10, the electronic security module permits verification of the credit card and encoding of game result signals from processor 2. The credit card, in addition to authentication information, also contains quantitative information indicating a cash equivalent, i.e., is a sort of "electronic depository," without identifying its holder.

### Industrial Applicability

The game method with credit card suggested, supported by the device just described, is as follows.

Credit card 10 is inserted into electronic gaming device 1. Reader 9 and electronic security module 8 verify the validity of the credit card and information on the ability to play the game is transmitted to display 6. Control organs 7 are used to input the initial conditions of the game and then the game itself is played. After a game session, information on the win (loss) is sent by processor 2 through electronic security module 8 and reader 9 to credit card 10, where the result is added to (subtracted from) the cash balance of the user. If sufficient cash remains to continue the game, a signal is sent from processor 2 to the display to indicate the possibility of continuing the game.

With this method, the game can be played independently as long as the credit card retains the necessary balance. If he wins, the user can, at any desired time, present the credit card to the appropriate financial institution to obtain his winnings.

Thus, the game method with credit card suggested and the technical implementation of the device for its performance allow:
- complete independence of the gaming process, i.e., elimination of the single central processor, allowing the user to play the game at any convenient location;
- elimination of excess user demographic data from the credit card.

Furthermore, confidentiality (anonymity) and ease of operating this gaming system allow the user to be psychologically comfortable as the game is played, and the reduced cost of such a system, resulting from the elimination of the expensive single central processor, and portability of the gaming device allow the network of users of the game to be expanded.

## Claims

1. A method for operating a gaming system with a credit card, in which the validity of the card is verified, ability to play the game is determined, the game is played by means of an electronic gaming device and the result of the game is recorded, characterized in that
the gaming device is a portable device;
the credit card is anonymous, and contains no user demographic data;
the game is played independently of any other gaming device or central data base;
and the result of the game is stored directly on the credit card by the use of the electronic gaming device.

2. A system for playing a game with a credit card, comprising:
an independent, portable electronic gaming device;
an anonymous credit card arranged for insertion into said electronic gaming device, said credit card including information relating to the gaming device and results of the game, with no user demographic data; and
means in the electronic gaming device for storing the result of the game directly on the credit card.

3. A device for playing a game with a credit card, comprising:
an independent electronic gaming device;
a credit card arranged for insertion into said electronic gaming device; and
means in the electronic gaming device for storing the result of the game directly on the credit card.
